# EUROPÄISCHE PATENTSCHRIFT

(11) **EP 2 347 146 B1**
(45) Veröffentlichungstag und Bekanntmachung des Hinweises auf die Patenterteilung: **12.12.2012**
(21) Anmeldenummer: 09748087.5
(22) Anmeldetag: 27.10.2009
(51) Int. Cl.: F16H 7/12

(54) **LINEAR WIRKENDES SPANNELEMENT**
LINEARLY ACTING TENSIONING ELEMENT
ÉLÉMENT DE TENSION LINÉAIRE

(30) Priorität: 12.11.2008 DE 102008057041
(43) Veröffentlichungstag der Anmeldung: 27.07.2011
(73) Patentinhaber: Schaeffler Technologies AG & Co. KG, 91074 Herzogenaurach (DE)
(72) Erfinder: KAISER, Jörg, 91475 Lonnerstadt (DE)
(86) Internationale Anmeldenummer: PCT/EP2009/064109
(87) Internationale Veröffentlichungsnummer: WO 2010/054927

(56) Entgegenhaltungen:
- EP-A- 0 407 261
- EP-A- 1 022 487
- WO-A-2007/097261
- DE-A1-102004 047 450

## Beschreibung

### Gebiet der Erfindung

Die Erfindung betrifft ein linear wirkendes Spannelement, das in Zugmitteltrieben von Brennkraftmaschinen einsetzbar ist und mit dem eine ausreichende Vorspannung des Zugmittels sichergestellt werden kann. Der Aufbau des Spannelementes umfasst ein einen Zylinder bildendes Gehäuse, indem ein Kolben linear verschiebbar geführt ist. Weiterhin ist ein Federmittel so zwischen dem Gehäuse und dem Kolben angeordnet, dass diese Elemente im Einbauzustand kraftschlüssig vorgespannt sind.

### Gebiet der Erfindung

Linear wirkende Spannelemente werden zur Gewährleistung einer konstanten Vorspannung von Zugmitteln, insbesondere Endlosriemen in Zugmitteltrieben wie, Aggregatetrieben und / oder Steuertrieben von Brennkraftmaschinen eingesetzt.

Aus der JP 53 12 240 A ist ein Linearspannelement bekannt, bestehend aus einer Spannrolle, die mit dem Zugmittel des Zugmitteltriebs in einer Wirkverbindung steht. Das federbelastete Bauteil des Linearspanners ist dabei über eine Welle mit einer Umlenkrolle verbunden.

Der Aufbau des linear wirkendes Spannelementes gemäß der DE 10 2004 054 636 A1 umfasst ein ortsfest positioniertes, schwenkbar angeordnetes Basiselement, dass mit einem drehfesten, axialbeweglichen Verschiebeteil in Verbindung steht. Dabei ist das Verschiebeteil mittelbar oder unmittelbar, insbesondere über eine Spannrolle mit dem Zugmittel verbunden. Weiterhin schließt das Spannelement ein koaxial zu dem Verschiebeteil angeordnetes und mittels einer Drehfeder und/oder einer Druckfeder drehbelastetes Drehwellenteil ein, welches sich an einem Grundelement und über ein Bewegungsgewinde an dem Verschiebeteil abstützt. Dabei übernimmt das Federmittel gleichzeitig die Funktion einer mechanischen Dämpfung des Zugmitteltriebs.

Ein Spannelement mit den Merkmalen des Oberbegriffs von Anspruch 1 geht aus der DE 10 2004 047 450 A1 hervor.

### Aufgabe der Erfindung

Die bekannten Spannelemente berücksichtigend, besteht die Aufgabe der vorliegenden Erfindung darin, ein wirksames, kostengünstig herstellbares, lineares Spannelement zu schaffen.

### Zusammenfassung der Erfindung

Diese Problemstellung wird durch eine Vorrichtung gemäß Anspruch 1 und durch ein Verfahren gemäß Anspruch 11 gelöst.

Der erfindungsgemäße Aufbau des linearen Spannelements nach Anspruch 1 umfasst ein Gehäuse mit integriertem Zylinder, indem ein Kolben über eine den Kolben bereichsweise ummantelten Gleitlagerbuchse geführt ist, die den Kolben bereichsweise ummantelt. Ein zwischen dem Kolben und dem Gehäuse eingesetztes Federmittel, dem eine Führungshülse zugeordnet ist, bewirkt in der Einbaulage des Spannelements eine kraftschlüssige gespreizte Anordnung von Kolben und Gehäuse. Zur Schaffung einer Hubbegrenzung, die gleichzeitig eine Verliersicherung im vormontierten Zustand des Spannelements bildet, ist in dem Kolben quer zur Längsachse ein Stift eingesetzt, der formschlüssig in einen Längsschlitz des Zylinders eingreift. Diese Stiftanordnung bewirkt gleichzeitig eine vorteilhafte Lageorientierung des Kolbens gegenüber dem Zylinder und dem zugehörigen Gehäuse, wodurch sich die Montage vorteilhaft vereinfacht.

Mit dem erfindungsgemäßen linearen Spannelement, das auch als Federmittel zu bezeichnen ist sind Spannfunktionen realisierbar, die einem hydraulischen Spannelement entsprechen, unter Berücksichtung geringerer Dämpfungseigenschaften. Wenn die Systembedingungen eine niedrige Dämpfung zulassen, kann dieses Spannelement beispielsweise mittels einer Drehpunktsdämpfung in einer Lagerung eines mit dem erfindungsgemäßen Spannelement zusammenwirkenden Hebels oder direkt in Verbindung mit dem Federmittel angeordnet werden, wodurch sich eine signifikante Kostenersparnis einstellt.

Somit bietet das erfindungsgemäße mechanische Spannelement für Riementriebe, bei denen aufgrund spezifischer Systembedingungen die Dämpfungsfunktion hydraulischer Spannelemente nicht erforderlich ist eine kostengünstige Alternative. Vorteilhaft schließt das erfindungsgemäße Spannelement dazu eine mit dem hydraulischen Spannelement übereinstimmende Anschraubgeometrie ein, die eine vollständige Austauschbarkeit hinsichtlich Bauraum und Adaption der Spannelemente ermöglicht.

Für die Bauteile Gehäuse und Kolben ist als Werkstoff erfindungsgemäß Kunststoff vorgesehen, wodurch sich eine vorteilhaft gewichtsoptimierte Bauweise des erfindungsgemäßen, linearen Spannelements einstellt.

Weitere vorteilhafte Ausgestaltungen der Erfindung sind Gegenstand der abhängigen Ansprüche 2 bis 10.

Eine bevorzugte Ausgestaltung der Erfindung sieht vor, dass die von dem Federmittel umschlossene Führungshülse gehäuseseitig einen umlaufenden radial nach außen gerichteten Bord bildet. Das Federmittel ist dabei über ein Federende an dem Bord abgestützt und bewirkt im Einbauzustand eine kraftschlüssige Anlage der Führungshülse an einem Bund des Gehäuses. Diese vorzugsweise ebenfalls aus Kunststoff hergestellte Führungshülse verhindert einerseits ein Ausbauchen einzelner Windungen des Federmittels und bewirkt andererseits eine gewünschte geradlinige Krafteinleitung, beziehungsweise Übertragung der Federkraft in das Gehäuse. Bevorzugt erstreckt sich die Führungshülse unabhängig von dem Betriebszustand des Spannelements nahezu über die halbe Länge des Federmittels. Als Federmittel wird vorteilhaft eine Schrauben-Druckfeder eingesetzt, die mit dem ersten Federende an einem Federteller des Kolbens und mit einem zweiten Federende mittelbar an dem Bund des Gehäuses abgestützt ist.

Zur Gewichtsoptimierung sind alle wesentlichen Bauteile, wie Kolben, Gehäuse und Führungshülse des erfindungsgemäßen Spannelements aus Kunststoff hergestellt. Als Werkstoff wird bevorzugt PA 66 mit einem Glasfaseranteil ≥ 35% eingesetzt.

Eine weitere konstruktive Maßnahme der Erfindung sieht vor, dass der Kolben über eine formschlüssig und/oder kraftschlüssig an dem Kolben befestigte Gleitlagerbuchse in dem Zylinder geführt ist. Bedarfsabhängig kann eine umlaufend geschlossen oder geschlitzt ausgeführte Gleitlagerbuchse eingesetzt werden. Für die Gleitlagerbuchse bietet es sich an als Werkstoff Polyamid wie beispielsweise PA 66 H zu verwenden, wobei der Buchstabe H eine hohe Temperaturbeständigkeit definiert.

Für eine effektive, kostengünstig darstellbare Hubbegrenzung des Kolbens bietet es sich erfindungsgemäß an, als Stift eine Wälzkörpernadel eines handelsüblichen Nadellagers zu verwenden. Die Wälzkörpernadel wird in eine Querbohrung des Kolbens im Bereich eines endseitigen zylindrischen Ansatzes eingepresst.

Eine weitere Maßnahme mit der das Gewicht des Spannelements gemäß der Erfindung reduziert werden kann sieht vor, ein Querschnittsprofil des Kolbens weitestgehend kreuzförmig auszubilden. Dieses Querschnittsprofil erstreckt sich von einem Federteller des Kolbens bis zu einem zylindrischen Ansatz am freien Ende des Kolbens. An dem zylindrischen Ansatz des Kolbens schließt sich in Richtung des Federtellers zeigend, ein längenbegrenzt durchmesserreduzierter Abschnitt an, der zur Aufnahme der Gleitlagerbuchse bestimmt ist.

Mittels eines separaten Werkzeugs oder einer separaten Vorrichtung wird bei der Montage des erfindungsgemäßen linearen Spannelements das Federmittel über die Führungshülse bis zu einer Blockanlage der Federwindungen zusammengedrückt. Dadurch wird die Möglichkeit geschaffen, den für die Hubbegrenzung bestimmten Stift in den Kolben einzupressen. Als Werkzeug eignet sich beispielsweise ein u-förmig gestalteter Bügel, bei dem ein erster Schenkel an dem Federteller und ein zweiter Schenkel an dem Bord der Führungshülse abgestützt ist.

Die Erfindung nach Anspruch 11 betrifft ein Verfahren zur Montage des linearen Spannelementes, das folgende Schritte umfasst. Zunächst wird an dem Kolben eine Gleitlagerbuchse befestigt, bevor das Federmittel axial auf den Kolben aufgeschoben wird. Dann wird eine Führungshülse in einem von dem Federmittel und dem Kolben begrenzten Ringspalt eingesetzt. Anschließend werden der Zylinder sowie das zugehörige Gehäuse und der Kolben zusammengeführt, wobei der Zylinder außenseitig an der Führungshülse geführt ist. Danach erfolgt in einer Endlage des Kolbens an dem Gehäuse ein Zusammenpressen des Federmittels, vorzugsweise mit einem separaten Werkzeug oder mit einer separaten Vorrichtung bis zu einer Blockanlage der Federwindungen bei einer unmittelbaren Abstützung des Kolbens an dem Gehäuse. Abschließend wird zur Hubbegrenzung des Kolbens ein Stift in eine endseitige Bohrung des Kolbens eingepresst, der beidseitig des Kolbens austretend formschlüssig in eine Längsführung des Zylinders eingreift.

### Kurze Beschreibung der Zeichnungen

Die Erfindung wird im Folgenden anhand von zwei Zeichnungen näher erläutert, die ein Ausführungsbeispiel der Erfindung darstellen. Es zeigen:
- Figur 1: den Längsschnitt eines erfindungsgemäßen Spannelementes;
- Figur 2: das Spannelement gemäß Figur 1 mit zusammengepresstem Federmittel.

### Detaillierte Beschreibung der Zeichnungen

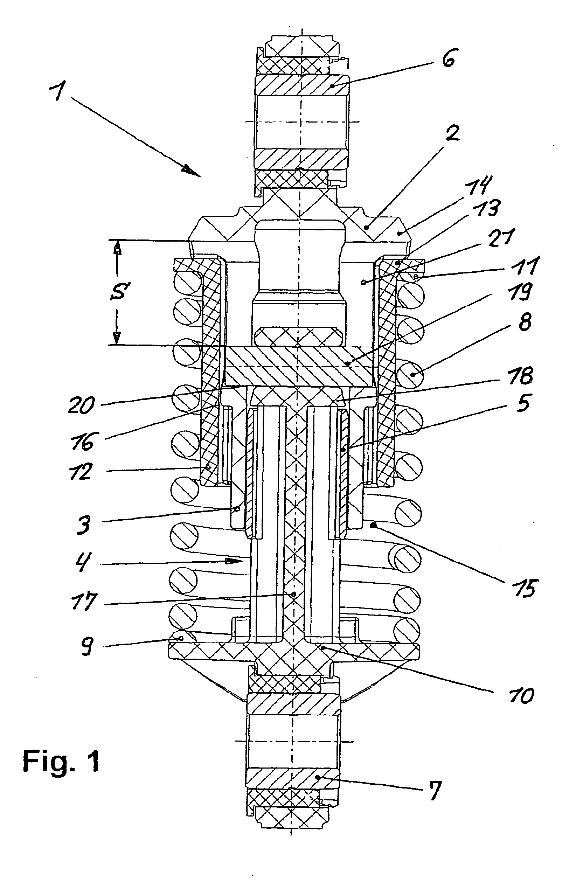

Das im Längsschnitt abgebildete Spannelement 1 gemäß Figur 1 umfasst ein Gehäuse 2, das einen Zylinder 3 beinhaltet, der zur Aufnahme eines Kolbens 4 bestimmt ist. Der Kolben 4 ist über eine Gleitlagerbuchse 5 linear verschiebbar in dem Zylinder 3 geführt. Im Einbauzustand des Spannelementes 1 ist das Gehäuse 2 sowie der Kolben 4 über als Befestigungsaugen ausgebildete Anlenkpunkte 6,7 beispielsweise mit einem ortsfesten Maschinenteil und einer Spannvorrichtung verbunden. Zwischen den Bauteilen dem Gehäuse 2 und dem Kolben 4 ist ein als Schrauben-Druckfeder ausgebildetes Federmittel 8 eingesetzt. Kolbenseitig stützt sich das Federmittel 8 über ein erstes Federende 9 an einem einstückig mit dem Kolben 4 verbundenen Federteller 10 ab. Das zweite eine Führungshülse 12 umschließende Federende 11 ist an einem Bord 13 der Führungshülse 12 abgestützt, wobei der Bord 13 kraftschlüssig an einem Bund 14 des Gehäuses 2 anliegt. Die Führungshülse 12 füllt über nahezu die halbe Länge des Federmittels 8 einen Ringspalt 15 aus, der sich zwischen einer Mantelfläche 16 des Zylinders 3 und einer Innenkontur des Federmittels 8 einstellt. Der Kolben 4 besitzt in einer Zone 17, die sich zwischen dem Federteller 10 und einem zylindrischen Ansatz 18 einstellt, ein kreuzförmiges Querschnittsprofil. Zur Hubbegrenzung für den Kolben 4 ist ein Stift 19 vorgesehen, der in einer Querbohrung 20 von dem Ansatz 18 eingebracht, beidseitig aus dem Kolben 4 austritt und formschlüssig in einen Längsschlitz 21 des Zylinders 3 eingreift. Eine Länge des Längsschlitzes 21 definiert dabei einen maximalen Hub "S" des Kolbens 4.

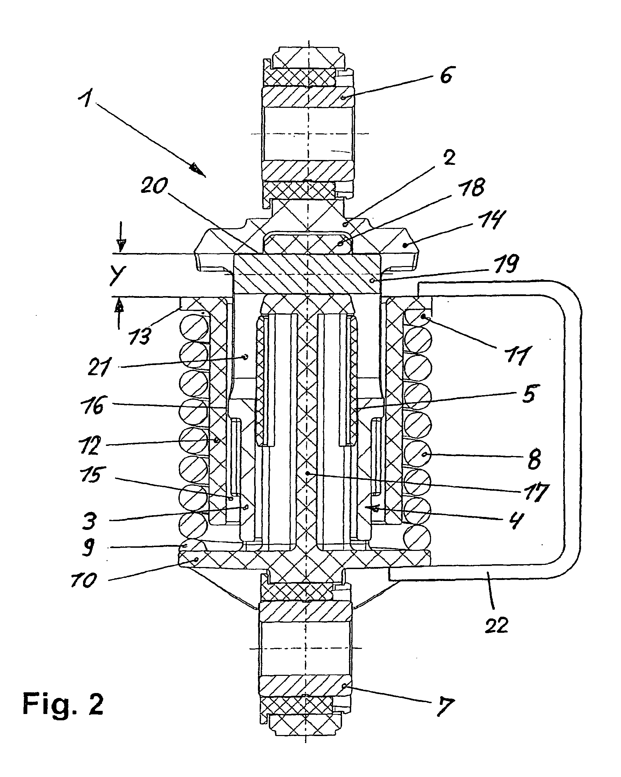

Die Figur 2 zeigt das Spannelement 1 gemäß Figur 1 in einer Endstellung, definiert durch eine Abstützung von dem Stift 19 an dem Bund 14 des Gehäuses 2. Weiterhin ist in Figur 2 das zusammengepresste Federmittel 8 abgebildet, wodurch sich ein Abstand "y" zwischen dem Bord 13 der Führungshülse 12 und dem Bund 14 des Gehäuses einstellt. Das zusammengepresste Federmittel 8 ermöglicht die Montage von dem Stift 19, der radial in die Bohrung 20 von dem Ansatz 18 des Kolbens 4 eingepresst wird und damit eine Hubbegrenzung für den Kolben 4 bildet und gleichzeitig eine wirksame Verliersicherung aller Bauteile des Spannelementes 1. Der beidseitig des Kolbens 4 in der Längsführung 21 des Zylinders 3 geführte Stift 19 bewirkt außerdem eine Lageorientierung zwischen dem Gehäuse 2 und dem Kolben 4. Als Montagehilfe mit dem das Federmittel 8 in Verbindung mit der Führungshülse 12 in einer zusammengepressten Position gehalten werden kann ist ein Haltebügel 22 vorgesehen, der mit einem Schenkel an dem Federteller 10 und dem weiteren Schenkel an dem Bord 13 der Führungshülse 12 abgestützt ist.

### Bezugszahlenliste

- 1: Spannelement
- 2: Gehäuse
- 3: Zylinder
- 4: Kolben
- 5: Gleitlagerbuchse
- 6: Anlenkpunkt
- 7: Anlenkpunkt
- 8: Federmittel
- 9: Federende
- 10: Federteller
- 11: Federende
- 12: Führungshülse
- 13: Bord
- 14: Bund
- 15: Ringspalt
- 16: Mantelfläche
- 17: Zone
- 18: Ansatz
- 19: Stift
- 20: Querbohrung
- 21: Längsschlitz
- 22: Haltebügel

## Patentansprüche

1. Linear wirkendes Spannelement (1), vorgesehen für einen Zugmitteltrieb einer Brennkraftmaschine, mit dem ein Zugmittel vorgespannt wird, bestehend aus einem einen Zylinder (3) bildenden Gehäuse (2), in dem ein Kolben (4) linear verschiebbar geführt ist, wobei das Gehäuse (2) und der Kolben (4) übereinstimmend einen Anlenkpunkt (6,7) aufweisen und zwischen beiden aus Kunststoff hergestellten Bauteilen ein Federmittel (8) angeordnet ist, **dadurch gekennzeichnet, dass** der Kolben (4) über eine Gleitlagerbuchse (5) in dem Zylinder (3) geführt ist, wobei dem Federmittel (8) zumindest bereichsweise eine Führungshülse (12) zugeordnet ist und zur Lageorientierung und zur Hubbegrenzung ein dem Kolben (4) zugeordneter Stift (19), formschlüssig in einen Längsschlitz (21) des Zylinders (3) eingreift.

2. Spannelement nach Anspruch 1, **dadurch gekennzeichnet, dass** die von dem Federmittel (8) umschlossene Führungshülse (12) gehäuseseitig einen umlaufenden radial nach außen gerichteten Bord (13) bildet, über den die Führungshülse (12) im Betriebszustand an einem Bund (14) des Gehäuses (2) kraftschlüssig abgestützt ist.

3. Spannelement nach Anspruch 2, **dadurch gekennzeichnet, dass** die Führungshülse (12) sich unabhängig von dem Betriebszustand des Spannelementes (1) nahezu über die halbe Länge des Federmittels (8) erstreckt.

4. Spannelement nach Anspruch 1, **dadurch gekennzeichnet, dass** als Federmittel (8) eine Schrauben-Druckfeder vorgesehen ist, die kolbenseitig an einem Federteller (10) und gehäuseseitig über einen Bord (13) der Führungshülse (12) des Gehäuses (2) abgestützt ist.

5. Spannelement nach Anspruch 1, **dadurch gekennzeichnet, dass** PA 66 mit einem Glasfaseranteil ≥ 35% als Werkstoff für die Bauteile Kolben (4), Gehäuse (2) und Führungshülse (12) vorgesehen ist.

6. Spannelement nach Anspruch 1, **dadurch gekennzeichnet, dass** die geschlossen oder geschlitzt ausgeführte Gleitlagerbuchse (5) formschlüssig und / oder kraftschlüssig an dem Kolben (4) befestigt ist.

7. Spannelement nach Anspruch 6, **dadurch gekennzeichnet, dass** die Gleitlagerbuchse (5) aus Polyamid, wie PA 66 H hergestellt ist.

8. Spannelement nach Anspruch 1, **dadurch gekennzeichnet, dass** zur Hubbegrenzung eine Wälzkörpernadel eines handelsüblichen Nadellagers als Stift (19) in dem Kolben (4) eingebracht ist.

9. Spannelement nach Anspruch 1, **dadurch gekennzeichnet, dass** der Kolben (4) in einer von dem Federteller (10) und einem Ansatz (18) begrenzten Zone (17) ein weitestgehend kreuzförmiges Querschnittsprofil aufweist

10. Spannelement nach Anspruch 1, **dadurch gekennzeichnet, dass** mittels einer separaten Vorrichtung oder eines separaten Haltebügels (42) das Federmittel (8) zusammengepresst und/oder in einer zusammengepressten Position gehalten werden kann.

11. Verfahren zur Montage eines linearen Spannelements (1) gemäß Anspruch 1, umfassend die folgenden Schritte:
- Montage der Gleitlagerbuchse (5) an dem Kolben (4);
- Einführen des Kolbens (4) in das Federmittel (8);
- Einsetzen der Führungshülse (12) in einen von dem Federmittel (8) und dem Kolben (4) begrenzten Ringspalt (15);
- Zusammenführen von dem Zylinder (3) und dem Kolben (4), wobei der Zylinder (3) außenseitig an der Führungshülse (12) geführt ist;
- Zusammenpressen des Federmittels (8) bis zur Blockanlage von Federwindungen mittels eines separaten Werkzeugs oder einer separaten Vorrichtung;
- Einpressen des Stifts (19) in eine Querbohrung (20) des Kolbens (4), der eine Hubbegrenzung des Kolbens (4) bildet.

## Claims

1. Linearly acting tensioning element (1), provided for a traction drive of an internal combustion engine, by means of which a traction means is pretensioned, comprising a housing (2), which forms a cylinder (3) and in which a piston (4) is guided in a linearly displaceable manner, the housing (2) and the piston (4) having a coinciding coupling point (6, 7) and a spring means (8) being arranged between the two components which are made from plastic, **characterized in that** the piston (4) is guided in the cylinder (3) by a plain bearing bush (5), with a guide sleeve (12) being assigned to the spring means (8), at least over a certain area, and, for the purpose of positional orientation and for limiting the stroke, a pin (19) assigned to the piston (4) engaging positively in a longitudinal slot (21) in the cylinder (3).

2. Tensioning element according to Claim 1, **characterized in that** the guide sleeve (12) surrounded by the spring means (8) forms an encircling, radially outward-directed flange (13) at the housing end, via which flange the guide sleeve (12) is supported nonpositively on a collar (14) of the housing (2) in the operating state.

3. Tensioning element according to Claim 2, **characterized in that** the guide sleeve (12) extends over almost half the length of the spring means (8), irrespective of the operating state of the tensioning element (1).

4. Tensioning element according to Claim 1, **characterized in that** a helical compression spring, which is supported on a spring plate (10) at the piston end and by way of a flange (13) of the guide sleeve (12) of the housing (2) at the housing end, is provided as the spring means (8).

5. Tensioning element according to Claim 1, **characterized in that** PA 66 with a glass fiber content ≥ 35% is provided as a material for the components comprising the piston (4), the housing (2) and the guide sleeve (12).

6. Tensioning element according to Claim 1, **characterized in that** the plain bearing bush (5), which is embodied in such a way as to be closed or slotted, is secured positively and/or nonpositively on the piston (4).

7. Tensioning element according to Claim 6, **characterized in that** the plain bearing bush (5) is made of polyamide, such as PA 66 H.

8. Tensioning element according to Claim 1, **characterized in that** a rolling contact needle of a commercially available needle bearing is introduced as a pin (19) in the piston (4) for the purpose of limiting the stroke.

9. Tensioning element according to Claim 1, **characterized in that** the piston (4) has a very largely cross-shaped cross-sectional profile in a zone (17) bounded by the spring plate (10) and a projection (18).

10. Tensioning element according to Claim 1, **characterized in that** the spring means (8) can be compressed and/or held in a compressed position by means of a separate device or of a separate holding clamp (22).

11. Method for assembling a linear tensioning element (1) according to Claim 1, the method comprising the following steps:
- mounting of the plain bearing bush (5) on the piston (4);
- introduction of the piston (4) into the spring means (8);
- insertion of the guide sleeve (12) into an annular gap (15) bounded by the spring means (8) and the piston (4);
- assembly of the cylinder (3) and the piston (4), the cylinder (3) being guided on the outside of the guide sleeve (12);
- compression of the spring means (8) by means of a separate tool or a separate device until the spring turns abut;
- pressing a pin (19) into a transverse hole (20) in the piston (4), said pin forming a stroke limiter for the piston (4).

## Revendications

1. Elément de tension linéaire (1) prévu pour un entraînement à moyen de traction d'un moteur à combustion interne, avec lequel un moyen de tension est précontraint, constitué d'un boîtier (2) formant un cylindre (3), dans lequel est guidé un piston (4) de manière déplaçable linéairement, le boîtier (2) et le piston (4) présentant de manière coïncidente un point d'articulation (6, 7) et un moyen de ressort (8) étant disposé entre les deux composants fabriqués en plastique, **caractérisé en ce que** le piston (4) est guidé dans le cylindre (3) par le biais d'un manchon de palier lisse (5), une douille de guidage (12) étant associée au moins en partie au moyen de ressort (8) et pour l'orientation de la position et pour la limitation de course une goupille (19) associée au piston (4) venant en prise par engagement positif dans une fente longitudinale (21) du cylindre (3).

2. Elément de tension selon la revendication 1, **caractérisé en ce que** la douille de guidage (12) entourée par le moyen de ressort (8) forme du côté du boîtier un bord (13) périphérique orienté radialement vers l'extérieur, par le biais duquel la douille de guidage (12) est supportée par engagement par force dans l'état fonctionnel sur un épaulement (14) du boîtier (2).

3. Elément de tension selon la revendication 2, **caractérisé en ce que** la douille de guidage (12) s'étend pratiquement sur toute la moitié de la longueur du moyen de ressort (8) indépendamment de l'état de fonctionnement de l'élément de serrage (1).

4. Elément de tension selon la revendication 1, **caractérisé en ce qu'**un ressort de compression hélicoïdal est prévu en tant que moyen de ressort (8), lequel est supporté du côté du piston sur un plateau de ressort (10) et du côté du boîtier par le biais d'un bord (13) de la douille de guidage (12) du boîtier (2).

5. Elément de tension selon la revendication 1, **caractérisé en ce que** l'on prévoit du PA 66 avec une proportion de fibres de verre 35 % en tant que matériau pour les composants du piston (4), du boîtier (2) et de la douille de guidage (12).

6. Elément de tension selon la revendication 1, **caractérisé en ce que** le manchon de palier lisse (5) fermé ou réalisé sous forme fendue est fixé par engagement positif et/ou par engagement par force sur le piston (4).

7. Elément de tension selon la revendication 6, **caractérisé en ce que** le manchon de palier lisse (5) est fabriqué en polyamide, comme du PA 66 H.

8. Elément de tension selon la revendication 1, **caractérisé en ce que** pour la limitation de course, une aiguille de corps de roulement d'un palier à aiguille usuel dans le commerce est introduite en tant que goupille (19) dans le piston (4).

9. Elément de tension selon la revendication 1, **caractérisé en ce que** le piston (4) présente, dans une zone (17) limitée par le plateau de ressort (10) et par un épaulement (18), un profil en section transversale essentiellement cruciforme.

10. Elément de tension selon la revendication 1, **caractérisé en ce que** le moyen de ressort (8) peut être comprimé et/ou peut être maintenu dans une position comprimée au moyen d'un dispositif séparé ou d'un étrier de retenue séparé (22).

11. Procédé de montage d'un élément de tension linéaire (1) selon la revendication 1, comprenant les étapes suivantes :
- montage du manchon de palier lisse (5) sur le piston (4) ;
- introduction du piston (4) dans le moyen de ressort (8) ;
- insertion de la douille de guidage (12) dans une fente annulaire (15) limitée par le moyen de ressort (8) et le piston (4) ;
- assemblage du cylindre (3) et du piston (4), le cylindre (3) étant guidé du côté extérieur sur la douille de guidage (12) ;
- compression du moyen de ressort (8) jusqu'à ce que les spires du ressort viennent en butée de blocage au moyen d'un outil séparé ou d'un dispositif séparé ;
- enfoncement de à goupille (19) dans un alésage transversal (20) du piston (4), qui forme une limitation de la course du piston (4).
